# EUROPEAN PATENT APPLICATION

(11) **EP 0 566 349 A2**
(43) Date of publication of application: **20.10.1993**
(21) Application number: 93302836.7
(22) Date of filing: 13.04.1993
(51) Int. Cl.: C08F 4/602, C08F 10/00

(54) **Process for producing alpha-olefin polymers**

(30) Priority: 15.04.1992 JP 95574/92
(71) Applicant: MITSUBISHI CHEMICAL CORPORATION, Chiyoda-ku, Tokyo-to (JP)
(72) Inventor: Fujita, Takashi, c/o Mitsubishi Petrochem. Co.Ltd., Yokkaichi-shi, Mie-Ken (JP); Sugano, Toshihiko, c/o Mitsubishi Petrochem.Co.Ltd, Yokkaichi-shi, Mie-Ken (JP); Uchino, Hideshi, c/o Mitsubishi Petrochem Co. Ltd., Yokkaichi-shi, Mie-Ken (JP)
(74) Representative: Kyle, Diana

(57) **Abstract**

A process for producing an α-olefin polymer characterized in that an α-olefin is brought into contact with a catalyst which comprises the following components (A) and (B) and has undergone the preliminary polymerization of an α-olefin under the following preliminary polymerization conditions (i) and (ii) thereby polymerizing the α-olefin :
preliminary polymerization conditions :
   (i) the polymer produced by the preliminary polymerization has a number average molecular weight based on the measurement of GPC of at least 100,000 ;
   (ii) the amount of the polymer produced by the pre-polymerization exceeds 50 g of the polymer/g of the component (A) ;
component (A):
   a prescribed transition metal compound having a cyclopentadienyl ligand, component (B):
   a prescribed alumoxane.

A polymer having a particle diameter of 100 µm or more can be stably produced by a simple and easy method, and the polymer can be handled easily.

## Description

### BACKGROUND OF THE INVENTION

The present invention relates generally to processes for producing a-olefin polymers. Specifically, the present invention relates to a process for producing α-olefin polymers having an average particle diameter of 100 µm or more, the process comprising polymerizing an a-olefin with a catalyst which has been used for the prepolymerization of an α-olefin with the use of metallocene under restricted conditions.

### Related Art

Catalysts for producing poly-olefins designated as metallocene catalysts are more-advantageous than other catalysts for the polymerization of polyolefins. Advantages in the use of the metallocene catalysts are their high productivity and their performance for controlling or changing the properties of many polymers by altering or changing the metallocenes. The polymer particles obtained by the aforementioned catalyst system, however, have been accompanied by a problem of difficulty of handling due to their small average particle diameters ranging from 10 to 50 µm.

Techniques for improving the aforementioned problem have been described in several literatures.

The method of preliminarily bringing a metallocene into contact with an alumoxane is disclosed in Japanese Patent Laid-Open Publication No. 51408/1989, but this method may cause problems such as the production of a polymer having a small particle diameter as a by-product or the lowering of polymerization activity.

The methods in which a metallocene is supported on an inorganic carrier are disclosed in Japanese Patent Laid-Open Publication Nos. 108610/1986, 296008/1986, 152608/1988 and 280703/1988. These techniques, however, may have also problems such as a tedious and complicated process for synthesizing catalysts, lowering of the catalyst activity and an inorganic support remaining as an ash residue in a produced polymer.

In addition, Japanese Patent Laid-Open Publication Nos. 199206/1988 and 140305/1991 disclose processes for producing a polymer having a large particle diameter by a process wherein a precipitate produced by the preliminary contact of a metallocene and an organoaluminum is subjected to pre-polymerization. These methods, however, essentially require the depositing step of preliminary contact product, and, moreover, as the particle diameter of the precipitate produced is governed by the fact that the particles precipitate from a solution whereby the particle size of the precipitate will be confined within a narrow range, there may be little freedom to vary the particle size of a-olefin polymers produced thereby and only the bulk specific gravity may be changed by the presence or absence of the pre-polymerization step. It may thus be difficult by these methods to control the particle size of α-olefin polymers appropriately, and thus further improvement may be desired.

These conventional techniques have the above described problems, and thus it has been difficult to obtain a polymer having a large particle size in a high yield by a simple and convenient method.

### SUMMARY OF THE INVENTION

The present invention has been achieved as a result of investigation for the purpose of solving the aforementioned problems.

There is thus presented a process for producing an α-olefin polymer according to the present invention which comprises contacting an a-olefin with a catalyst which comprises the following components (A) and (B) and has undergone the preliminary polymerization of an a-olefin under the following preliminary polymerization conditions (i) and (ii) thereby polymerizing the a-olefin.

### Preliminary polymerization conditions:

(i) the polymer produced by the preliminary polymerization has a number average molecular weight based on the measurement of Gel Permeation Chromatography of at least 100,000;
(ii) the amount of the polymer produced by the preliminary polymerization exceeds 50 g of the polymer/g of the component (A).

### Component (A):

A transition metal compound represented by the formula (I): 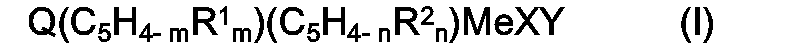
wherein Q represents a bridge which crosslinks the group (C₅H₄- ₘR¹ₘ) and the group (C₅H₄- ₙR²ₙ) and is a divalent hydrocarbyl group, a non-substituted or hydrocarbyl group-substituted silylene group, or a divalent hydrocarbyl group containing a germanium, phosphorus, nitrogen, boron or aluminum atom;
each of the group (C₅H₄₋ₘR¹ₘ) and the group (C₅H₄₋ₙR²ₙ) represents a cyclopentadienyl group or a derivative thereof wherein R¹ and R² each represents a hydrogen atom, a hydrocarbyl group, a halogen atom, or a hydrocarbyl group containing an oxygen, silicon, phosphorus, nitrogen or boron atom, respectively, and wherein R¹ and R², which may be the same or different and, when either of R¹ and R² is present in plurality, two of R¹ and R² may or may not be bonded at their respective terminus to form a fused ring with the cyclopentadienyl group;
Me represents a transition metal of the IVB-VIB group in the Periodic Table;
each of X and Y, which may be the same or different, represents a hydrogen atom, a halogen atom, a hydrocarbyl group, an alkoxy group, an amino group, a nitrogen-containing hydrocarbyl group, a phosphorus-containing hydrocarbyl group or a silicon-containing hydrocarbyl group, respectively; and
m is defined as 0 ≦ m ≦ 4, and n is defined as 0 ≦ b ≦ 4.

### Component (B)

An alumoxane represented by the general formula (II) or (III): 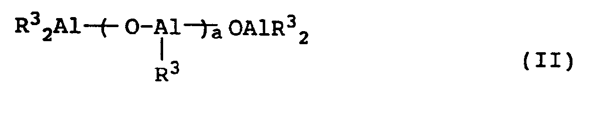 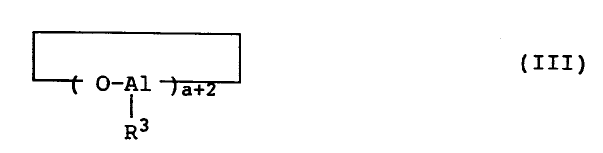
wherein a denotes a number in the range of 4 to 30, and R³ represents a monovalent hydrocarbyl group.

Accor̅ding to the process of the present invention, a polymer having a particle diameter of 100 µm or more can be stably produced by a simple and easy method, and the polymer can be handled easily.

### DETAILED DESCRIPTION OF THE INVENTION

The present invention relates to a process for producing an α-olefin polymer, characterized in that an a-olefin is brought into contact with a catalyst which comprises the following components (A) and (B) and has undergone the preliminary polymerization of an α-olefin under the following preliminary polymerization conditions (i) and (ii) thereby polymerizing the a-olefin.

The phraseology "which comprises the following components (A) and (B)" herein means that the catalyst may, if desired, be formed with a third component in addition to the components (A) and (B) as long as the object of the present invention can be achieved, that is, a polymer having a particle diameter of 100 µm or more can be obtained.

### Preliminary polymerization conditions

(i) The polymer produced by the preliminary polymerization has a number average molecular weight based on the measurement of GPC of at least 100,000.
(ii) The amount of the polymer produced by the preliminary polymerization exceeds 50 g of the polymer/g of the component (A).

### Component (A)

The component (A) is a transition metal compound represented by the formula (I):

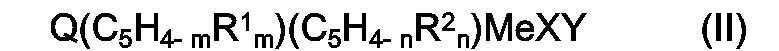

That is, this compound has a structure in which two conjugated five-membered ring groups C₅H₄₋ₘR¹ₘ and C₅H₄₋ nR2 crosslinked with the bridge Q, that is, Q(C₅H₄₋ₘR¹ₘ)(C₅H₄₋ₙR²ₙ)coordinate the transition metal compound MeXY of the IVB-VIB group in the Periodic Table.

In this connection, while the conjugated five-membered ring groups C₅H₄₋ₘR¹ₘ and C₅H₄₋ₙR²ₙ have been separately defined, m and n and R¹ and R² each have the same meaning, respectively (as will be described later in detail), so that it is needless to say that these two conjugated five-membered ring groups may be the same or different. A specific example of the conjugated five-membered ring groups is that wherein m = 0 (or n = 0), i.e., a cyclopentadienyl group (having no substituent other than the crosslinking group Q). In the case of the conjugated five-membered ring groups having a substituent, i.e., m ≠ 0 (or n ≠ 0), a specific example of R¹ (or R²) is a hydrocarbyl group having 1 to 20 carbon atoms, preferably 1 to 12 carbon atoms. The hydrocarbyl group R¹ (or R²) may be bonded as a monovalent group to a cyclopentadienyl group, but it is within the scope of the invention that, when R¹ (or R²) are present in plurality, free or "omega" terminus to form a ring together with a part of or fused with the cyclopentadienyl group. Atypical example of the latter is the one in which R¹ (or R²) forms a fused six-membered ring sharing a double bond in common with the cyclopentadienyl group, i.e., the one in which the conjugated five-membered ring groups is in the form of an indenyl group ora a fluorenyl group. That is, the typical examples of the conjugated five-membered ring groups are substituted or non-substituted cyclopentadienyl, indenyl and fluorenyl groups.

R¹ and R², respectively, include, in addition to the above-described hydrocarbyl group having 1 to 20 carbon atoms, preferably 1 to 12 carbon atoms, a halogen atom such as fluorine, chlorine or bromine; an alkoxy group such as that having 1 to 12 carbon atoms; a silicon-containing hydrocarbyl group such as that which contains silicon atom in the form of -Si(R⁴)(R⁵)(R⁶) and has 1 to about 24 carbon atoms; a phosphorus-containing hydrocarbyl group such as that which contains phosphorus atom in the form of -P(R)₂ and has 1 to about 18 carbon atoms; a nitrogen-containing hydrocarbyl group such as that which contains nitrogen atom in the form of -N(R)(R') and has 1 to about 18 carbon atoms, and a boron-containing hydrocarbyl group such as that which contains boron atom in the form of -B(R)₂ and has 1 to about 18 carbon atoms. When m (or n) is 2 or higher and there are thus two or more R^{l}s (or R²s), these groups may be the same or different.

Q is a bridge which crosslinks the two conjugated five-membered ring groups. Q is defined hereinabove, and specific examples include (a) an alkylene group such as a methylene group, an ethylene group, an isopropylene group, a phenylmethylmethylene group, a diphenylmethylene group, or a cyclohexylene group, (b) a silylene group such as a silylene group, a dimethylsilylene group, a phenylmethylsilylene group, a diphenylsilylene group, disilylene group, or a tetramethyldisilylene group, and (c) a hydrocarbyl group containing a non-carbon atom selected from the group of a germanium, phosphorus, nitrogen and aluminum atom such as (CH₃)₂Ge⁼, (C₆H₅)₂Ge=, (CH₃)P=, (C₄H₉)N=, (CH₃)B=, (C₆H₅)B=, or (C₆H₅)Al=. It is preferably an alkylene group or a silylene group. The shortest length of Q bridging the two cyclopentadienyl groups may, preferably, be 1 or 2 atoms as is evident from the preferred examples of Q given above, wherein a cycloalkylene is counted as 1 atom.

Me is a transition metal of the IVB-VIB group in the Periodic Table, preferably titanium, zirconium and hafnium. More preferably, it is zirconium and hafnium, particularly zirconium.

Each of X and Y is a hydrogen atom, a halogen atom, a hydrocarbyl group having 1 to 20, preferably 1 to 10 carbon atoms, an alkoxy group having 1 to 20, preferably 1 to 10 carbon atoms, an amino group which may or may not have an alkyl group having 1 to 20, preferably 1 to 10 carbon atoms, a phosphorus-containing hydrocarbyl group having 1 to 20, preferably 1 to 10 carbon atoms such as a diphenylphosphine group, and a silicon-containing hydrocarbyl group having 1 to 20, preferably 1 to 10 carbon atoms such as specifically a trimethylsilyl group. X and Y may be the same or different. m denote an integer defined as 0 Z m Z 4, and n denotes an integer defined as 0 Z n ≦ 4, respectively.

Specific examples of the transition metal compound in which Me is zirconium are as follows.
(a) Transition metal compounds containing a five-membered ring ligand crosslinked with an alkylene group such as:
   (1) Methylenebis(indenyl)zirconium dichloride,
   (2) Ethylenebis(indenyl)zirconium dichloride,
   (3) Ethylenebis(indenyl)zirconium monohydride monochloride,
   (4) Ethylenebis(indenyl)methylzirconium monochloride,
   (5) Ethylenebis(indenyl)zirconium monomethoxy monochloride,
   (6) Ethylenebis(indenyl)zirconium diethoxide,
   (7) Ethylenebis(indenyl)zirconium dimethyl,
   (8) Ethylenebis(4,5,6,7-tetrahydroindenyl)zirconium dichloride,
   (9) Ethylenebis(2-methylindenyl)zirconium dichloride,
   (10) Ethylenebis(2,4-dimethylindenyl)zirconium dichloride,
   (11) Ethylene(2,4-dimethylcyclopentadienyl)(3',5'-dimethylcyclopentadienyl)zirconium dichloride,
   (12) Ethylene(2-methyl-4-tert-butylcyclopentadienyl)(3'-tert-butyl-5'-methylcyclopentadienyl)zirconium dichloride,
   (13) Ethylene(2,3,5-trimethylcyclopentadienyl)(2',4',5'-trimethylcyclopentadienyl)zirconium dichloride,
   (14) Isopropylidenebis(indenyl)zirconium dichloride,
   (15) Isopropylidenebis(2-methylindenyl)zirconium dichloride,
   (16) Isopropylidenebis(2,4-dimethylindenyl)zirconium dichloride,
   (17) Isopropylidenebis(2,4-dimethylcyclopentadienyl)(3',5'-dimethylcyclopentadienyl)zirconium dichloride,
   (18) Isopropylidenebis(2-methyl-4-tert-butylcyclopentadienyl)(3'-tert-butyl-5-methylcyclopentadienyl)zirconium dichloride,
   (19) Methylene(cyclopentadienyl)(3,4-dimethylcyclopentadienyl)zirconium dichloride,
   (20) Methylene(cyclopentadienyl)(3,4-dimethylcyclopentadienyl)zirconium chloride hydride,
   (21) Methylene(cyclopentadienyl)(3,4-dimethylcyclopentadienyl)zirconium dimethyl,
   (22) Methylene(cyclopentadienyl)(3,4-dimethylcyclopentadienyl)zirconium diphenyl,
   (23) Methylene(cyclopentadienyl)(trimethylcyclopentadienyl)zirconium dichloride,
   (24) Methylene(cyclopentadienyl)(tetramethylcyclopentadienyl)zirconium dichloride,
   (25) Isopropylidene(cyclopentadienyl)(3,4-dimethylcyclopentadienyl)zirconium dichloride,
   (26) Isopropylidene(cyclopentadienyl)(2,3,4,5-tetramethylcyclopentadienyl)zirconium dichloride,
   (27) lsopropylidene(cyclopentadienyl)(3-methylindenyl)zirconium dichloride,
   (28) lsopropylidene(cyclopentadienyl)(fluorenyl)zirconium dichloride,
   (29) Isopropylidene(2-methylcyclopentadienyl)(fluorenyl)zirconium dichloride,
   (30) Isopropylidene(2,5-dimethylcyclopentadienyl)(3,4-dimethylcyclopentadienyl)zirconium dichloride,
   (31) Isopropylidene(2,5-dimethylcyclopentadienyl)(fluorenyl)zirconium dichloride,
   (32) Ethylene(cyclopentadienyl)(3,5-dimethylcyclopentadienyl)zirconium dichloride,
   (33) Ethylene(cyclopentadienyl)(fluorenyl)zirconium dichloride,
   (34) Ethylene(2,5-dimethylcyclopentadienyl)(fluorenyl)zirconium dichloride,
   (35) Ethylene(2,5-diethylcyclopentadienyl)(fluorenyl)zirconium dichloride,
   (36) Diphenylmethylene(cyclopentadienyl)(3,4-dimethylcyclopentadienyl)zirconium dichloride,
   (37) Diphenylmethylene(cyclopentadienyl)(3,4-diethylcyclopentadienyl)zirconium dichloride,
   (38) Cyclohexylidene(cyclopentadienyl)(fluorenyl)zirconium dichloride, and
   (39) Cyclohexylidene(2,5-dimethylcyclopentadienyl)(3',4'-dimethylcyclopentadienyl)zirconium dichloride.
(b) Transition metal compound containing a five-membered ring ligand crosslinked with a silylene group:
   (1) Dimethylsilylenebis(indenyl)zirconium dichloride,
   (2) Dimethylsilylenebis(2-methylindenyl)zirconium dichloride,
   (3) Dimethylsilylenebis(4,5,6,7-tetrahydroindenyl)zirconium dichloride,
   (4) Dimethylsilylenebis(2-methyl-4,5,6,7-tetrahydroindenyl)zirconium dichloride,
   (5) Dimethylsilylenebis(2,4-dimethylindenyl)zirconium dichloride,
   (6) Dimethylsilylene(2,4-dimethylcyclopentadienyl)(3',5'-dimethylcyclopentadienyl)zirconium dichloride,
   (7) Phenylmethylsilylenebis(indenyl)zirconium dichloride,
   (8) Phenylmethylsilylenebis(4,5,6,7-tetrahydroindenyl)zirconium dichloride,
   (9) Phenylmethylsilylenebis(2-methylindenyl)zirconium dichloride,
   (10) Phenylmethylsilylene(2,4-dimethylcyclopentadienyl)(3',5'-dimethylcyclopentadienyl)zirconium dichloride,
   (11) Phenylmethylsilylene(2,3,5-trimethylcyclopentadienyl)(2,4,5-trimethylcyclopentadienyl)zirconium dichloride,
   (12) Phenylmethylsilylenebis(tetramethylcyclopentadienyl)zirconium dichloride,
   (13) Diphenylsilylenebis(indenyl)zirconium dichloride,
   (14) Diphenylsilylenebis(2-methylindenyl)zirconium dichloride,
   (15) Diphenylsilylenebis(2,4-dimethylindenyl)zirconium dichloride,
   (16) Tetramethyldisilylenebis(indenyl)zirconium dichloride,
   (17) Tetramethyldisilylenebis(cyclopentadienyl)zirconium dichloride,
   (18) Tetramethyldisilylene(3-methylcyclopentadienyl)(indenyl)zirconium dichloride,
   (19) Dimethylsilylene(cyclopentadienyl)(3,4-dimethylcyclopentadienyl)zirconium dichloride,
   (20) Dimethylsilylene(cyclopentadienyl)(trimethylcyclopentadienyl)zirconium dichloride,
   (21) Dimethylsilylene(cyclopentadienyl)(tetramethylcyclopentadienyl)zirconium dichloride,
   (22) Dimethylsilylene(cyclopentadienyl)(3,4-diethylcyclopentadienyl)zirconium dichloride,
   (23) Dimethylsilylene(cyclopentadienyl)(triethylcyclopentadienyl)zirconium dichloride,
   (24) Dimethylsilylene(cyclopentadienyl)(tetraethylcyclopentadienyl)zirconium dichloride,
   (25) Dimethylsilyiene(cyclopentadienyl)(fluorenyl)zirconium dichloride,
   (26) Dimethylsilylene(cyclopentadienyl)(2,7-di-tert-butyl-fluorenyl)zirconium dichloride,
   (27) Dimethylsilyiene(cyclopentadienyl)(octahydrofluorenyl)zirconium dichloride,
   (28) Dimethylsilylene(2-methylcyclopentadienylfluorenyl)zirconium dichloride,
   (29) Dimethylsilylene(2,5-dimethylcyclopentadienyl)(fluorenyl)zirconium dichloride,
   (30) Dimethylsilylene(2-ethylcyclopentadienyl)(fluorenyl)zirconium dichloride,
   (31) Dimethylsilylene(2,5-diethylcyclopentadienyl)(fluorenyl)zirconium dichloride,
   (32) Dimethylsilylene(2-methylcyclopentadienyl)(2,7-di-tert-butylfluorenyl)zirconium dichloride,
   (33) Dimethylsilylene(2,5-dimethylcyclopentadienyl)(2,7-di-tert-butylfluorenyl)zirconium dichloride,
   (34) Dimethylsilylene(2-ethylcyclopentadienyl)(2,7-di-tert-butylfluorenyl)zirconium dichloride,
   (35) Dimethylsilylene(diethylcyclopentadienyl)(2,7-di-tert-butylfluorenyl)zirconium dichloride,
   (36) Dimethylsilyiene(methylcyclopentadienyl)(octahydrofluorenyl)zirconium dichloride,
   (37) Dimethylsilylene(dimethylcyclopentadienyl)(octahydrofluorenyl)zirconium dichloride,
   (38) Dimethylsilyiene(ethylcyclopentadienyl)(octahydrofluorenyl)zirconium dichloride, and
   (39) Dimethylsilylene(diethylcyclopentadienyl)(octahydrofluorenyl)zirconium dichloride.
(c) Transition metal compounds containing a five-membered ring ligand crosslinked with a hydrocarbyl group containing a germanium, aluminum, boron, phosphorus or nitrogen atom:
   (1) Dimethylgermaniumbis(indenyl)zirconium dichloride,
   (2) Dimethylgermaniumbis(2-methylindenyl)zirconium dichloride,
   (3) Dimethylgermanium(cyclopentadienyl)(fluorenyl)zirconium dichloride,
   (4) Methylaluminumbis(indenyl)zirconium dichloride,
   (5) Phenylaluminumbis(indenyl)zirconium dichloride,
   (6) Phenylphosphynobis(indenyl)zirconium dichloride,
   (7) Ethylphoranobis(indenyl)zirconium dichloride,
   (8) Phenylaminobis(indenyl)zirconium dichloride, and
   (9) Phenylamino(cyclopentadienyl)(fluorenyl)zirconium dichloride.
(d) The aforementioned compound (a), (b), and (c) in which chlorine has been substituted by the other substituents such as bromine, iodine, hydride, methyl or phenyl can also be used.

In the present invention, the aforementioned compounds (a)-(d) in which the central metal, zirconium, has been replaced by the other metal such as titanium, hafnium, niobium, molybdenum orwolfram can also be used.

Among these compounds, the zirconium compounds, the hafnium compounds and the titanium compounds are preferred. The hafnium compounds in which the crosslinking group Q is an alkylene group or a silylene group, and the zirconium compounds in which the bridge Q is an alkylene group or a silylene group and (C₅H₄- ₘR¹ₘ) and (C₅H₄₋ₙR²ₙ), respectively, represent an indenyl group having a substituent, preferably a lower alkyl group, at the 2-position counted from the position of the bridge or a derivative thereof are more preferred.

### Component (B)

The other catalyst component used in the present invention is an alumoxane represented by the following formulae (II) or (III): 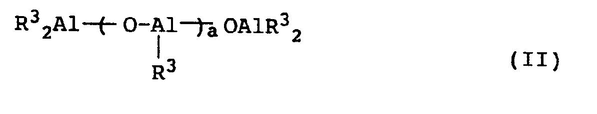 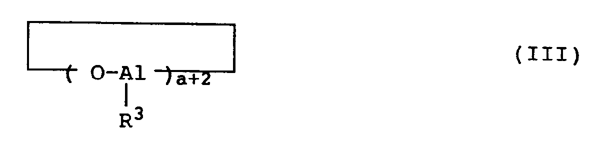
wherein a denotes a number from 4 to 30, preferably from 10 to 25, and R³ represents a monovalent hydrocarbyl moiety having preferably 1 to 10 carbon atoms, more preferably 1 to 4 carbon atoms.

The component (B) is a product obtained by the reaction of a trialkylaluminum or two or more types of a trialkylaluminum with water. Specifically, (a) alumoxanes obtained from a single species of trialkylaluminum such as methylalumoxane, ethylalumoxane, propylalumoxane, butylalumoxane and isobutylalumoxane; and (b) alumoxanes obtained from two types of a trialkylaluminum and water such as methylethylalumoxane, me- thylbutylalumoxane, and methylisobutylalumoxane are examples. Among these alumoxanes, methylalumoxane and methylisobutylalumoxane are particularly preferred.

These alumoxanes may if desired be used in combination within each group (a) or (b) or between the groups (a) and (b), and moreover may if desired be used in combination with another alkylaluminum compound such as trimethylaluminum, triethylaluminum, triisobutylaluminum, and dimethylaluminum chloride.

These alumoxanes can be prepared under various well-known conditions. Specifically, the following methods can be specified:
(i) a method where a trialkylaluminum is directly reacted with water in the presence of an appropriate organic solvent such as toluene, benzene or ether;
(ii) a method where a trialkylaluminum is reacted with a salt hydrate having water of crystallization such as a hydrate of copper sulfate or aluminum sulfate;
(iii) a method where a trialkylaluminum is reacted with water impregnated into silica gel;
(iv) a method where a mixture of trimethylaluminum and triisobutylaluminum is directly reacted with water in the presence of an appropriate organic solvent such as toluene, benzene or ether,
(v) a method where a mixture of trimethylaluminum and triisobutylaluminum is reacted under heating with a salt hydrate having water of crystallization such as a hydrate of copper sulfate or aluminum sulfate, (vi) a method where silica gel is impregnated with water, which is then treated with triisobutylaluminum followed by trimethylaluminum,
(vii) a method where methylalumoxane and isobutylalumoxane are synthesized by a known method, these two alumoxanes are mixed in the predetermined amounts, and the mixture is caused to react under heating, and
(viii) a method where a salt having water of crystallization such as copper sulfate pentahydrate added to an aromatic hydrocarbon solvent such as benzene, toluene or the like is reacted with trimethylaluminum at a temperature in the range of -40 to 40°C. In this case, the amount of water to be used is generally in a molar ratio from 0.5 to 1.5 to the amount of trimethylaluminum. The alumoxanes thus obtained are linear or cyclic organoaluminum polymers.

### Production of a-olefin polymers

The process for producing an α-olefin according to the present invention comprises contacting an α-olefin with a catalyst which comprises the above-described components (A) and (B) and has undergone a preliminary polymerization of an α-olefin under the specific preliminary polymerization conditions (i) and (ii) thereby polymerizing the α-olefin. The α-olefin used in the preliminary polymerization is one having 2 to 10 carbon atoms, preferably 3 to 6 carbon atoms. Propylene is particularly preferred.

### Preliminary polymerization conditions

Condition (i): This condition requires that the polymer produced by the preliminary polymerization have a number average molecular weight based on the measurement of Gel Permeation Chromatography (GPC) of at least 100,000. If this condition is not satisfied, the polymer obtained contains as by-products fine particles having an average particle diameter of 10 to 50 µm or consists only of these fine particles.

Condition (ii): This condition requires that the amount of the polymer produced by the preliminary polymerization exceed 50 g of the polymer/g of the component (A).

If this condition is not satisfied, polymers having low particle diameters are obtained as by-products. The amount is preferably in the range of 100 or more g of the polymer/g of the component (A), particularly 200 or more g of the polymer/g of the component (A) and about 10,000 or less g of the polymer/g of the component (A).

In the present invention, it is necessary to satisfy at least the aforedescribed conditions (i) and (ii), and it is preferred further to satisfy the following conditions in order to obtain a better α-olefin polymer. Condition (iii): This condition requires that, in the case of an a-olefin, the polymer produced by the preliminary polymerization have a value of [mm] or [rr] by ¹³C-NMR of 0.80 or more. If this condition is not satisfied, a polymer having a particle diameter of 100 µm or more may not be stably obtained. The value of [mm] or [rr] is preferably 0.85 or more.

Condition (iv): This condition requires that the temperature of preliminary polymerization be lower than 40°C. This condition is specified from the viewpoint of conducting a preliminary polymerization so that a polymer having a high molecular weight will be obtained at the preliminary polymerization. The temperature of preliminary polymerization in the present invention is at any level below 40°C, generally from -50°C to lower than 40°C, preferably from -20°C to lower than 40°C, particularly from 0°C to 30°C.

The time period required for the preliminary polymerization is such that a polymer will be produced at the preliminary polymerization in an amount of 50 g or more, preferably 100 g or more, preferably 200 g or more, and preferably about 10,000 g or less with respect to 1 g of the component (A). The specific value of the period, which may not be specified categorially because it is affected by the component (A) or the temperature of preliminary polymerization, may be in the range of 1 minute to about 120 minutes.

The olefin pressure during the preliminary polymerization, which is not specifically limited, may preferably be in the range from atmospheric pressure to 15 kg/cM^{2.}G.

The preliminary polymerization of the present invention may be conducted in the absence or presence of a solvent or dispersant, which may be a saturated aliphatic or aromatic hydrocarbon such as hexane, heptane, cyclohexane, and toluene, preferably those having 3 to 10 carbon atoms, more preferably those having 3 to 7 carbon atoms. Furthermore, in the preliminary polymerization of the present invention, the components (A) and (B), which may be deposited or dissolved in the solvent or dispersant used, are preferably in a dissolved state in view of the fact that the dissolved state may be conducive to produce catalyst particles which have undergone the preliminary polymerization and deposit from the solvent of improved granulometric properties which in turn governs granulometric properties of the polymer of an a-olefin produced over the catalyst particles at the main polymerization step. The hydrocarbons to be used are preferably aromatic hydrocarbons.

The average particle diameter of a polymer was measured with IMAGE ANALYZER, SPICA model, manufactured by NIPPON ABIONICS, Japan. The values [mm] or [rr] of a polymer by ¹³C-NMR were measured with JEOL FX-200 spectrometer manufactured by Japan Electron Optics Laboratory Co., Ltd., Japan, at a measuring temperature of 130°C, a measuring frequency of 50.1 MHz, a spectrum width of 8,000 Hz, a pulse interval of 2.0 seconds, a pulse width of 7 µsec and a scanning number of 10,000 to 50,000. The NMR spectra were analyzed on the basis of the methods described in A. Zambelli: Macromolecules, 21 617 (1988) and Tet- suro Asakura: Polymer Preprints, Japan, 36 (8), 2408 (1987).

In this connection, the [mm] fraction or the [rr] fraction of triad means the ratio (y/x) of the triads (y) having the structures [mm] (isotactic) or [rr] (syndiotactic) to the total number x of the three possible stereoisomers, i.e., [mm] (isotactic), [mr] (heterotactic) and [rr] (syndiotactic), of the "triad", that is the "trimer unit" which is the minimum unit of a stereo structure as a monomer unit in an α-olefin polymer.

### Production of a-olefin polymers

The present invention is generally useful for the production of any a-olefin polymer. However, an a-olefin having 2 to 10 carbon atoms is preferred on the points of the availability or reactivity of a polymer produced, and propylene is most preferred. In.this connection, in the polymerization of propylene or a higher α-olefin, the component (A) has desirably a structure in which the position of a crosslinked five-membered ring ligand is not in the relationship of a substance and its mirror image with respect to the plane containing the metal Me in order to prepare a useful polymer product. However, such a restriction is not necessary forthe preparation of ethylene homopolymers or ethylene copolymers in which ethylene predominates.

The amount of the component (A) used in the present invention is preferably in the range of 10-⁷ to 10² mmol/liter in terms of the transition metal atom used, and the molar ratio of Al/transition metal is in the range of 50 or more, preferably 100 or more, more preferably 300 or more, particularly 1,000 or more, but no higher than approx. 20,000.

The catalyst which has undergone the preliminary polymerization according to the present invention is used in solvent polymerization, and is used also in liquid phase solventless polymerization or vapor phase polymerization in which no solvent is substantially used. The polymerization mode may be continuous polymerization or batch-wise polymerization. The solvent polymerization may be carried out in a solvent which is different from or the same as the one used in the preliminary polymerization. In addition, the improvement inherent in the present invention may be prominent in the case of solvent polymerization in which polymer particles produced can easily be disintegrated since solvent polymerization proceeds in slurry.

The polymerization temperature is preferably in the range of-10°C to 100°C, more preferably at or higher than the level used in the preliminary polymerization to 80°C. The olefin pressure of the reaction system, which is not critical, is preferably in the range of atmospheric pressure to 50 kg/cm^{2.}G.

### EXAMPLES

The present invention will be described more specifically by the following examples.

### Example 1

All of the reactions were carried out under an inert gas atmosphere. Solvents which had been preliminarily dried were used.

### Preparation of the Component (A)

The Component (A), ethylenebis(indenyl)hafnium dichloride to be used was synthesized in accordance with the method described by H.H. Britzinger: J. Orgmetallic Chemistry, 288, 65, 1985.

### Preparation of the Component (B)

The synthesis of an alumoxane was conducted as follows. Into a reaction vessel containing 565 ml of a solution in toluene of 48.2 g of trimethylaluminum was added 50 g of copper sulfate pentahydrate in 5 g portions at 5 minute intervals under stirring at 0°C. After the addition had been completed, the mixture was gradually heated to 25°C and caused to react at 25°C for 2 hours, and then at 35°C for 2 days. The remaining copper sulfate solid was removed by filtration to produce a solution in toluene of the alumoxane, methylalumoxane, in a concentration of 27.3 mg/ml or 2.7 wt/v%.

### Polymerization

Into an autoclave having an internal volume of 1.5 liters and equipped with a stirrer purged thoroughly with propylene, was introduced 600 ml of heptane and it was maintained at a temperature of 25°C. Next, methylalumoxane in an amount of 10 mmol in terms of the AI atom and 1 µmol of ethylenebisindenylhafnium dichloride were introduced, and propylene was then introduced to conduct the preliminary polymerization at a pressure in the autoclave of 0.5 kg/cm^{2.}G for 30 minutes.

After the preliminary polymerization was completed, 300 ml of the polymer slurry was taken out from the autoclave, and the polymer was separated from the slurry by filtration and dried to give 0.13 g of a polymer. The amount of preliminary polymerization per 1 g of the component (A), which will be referred to hereinafter as pre-polymerization PY, was 514 g, [mm] was 0.911 and Mn was 175,000.

After 200 ml of toluene was then supplemented, propylene was introduced to conduct polymerization at a pressure in the autoclave of 7 kg/cm^{2.}G at 40°C for 2 hours. After the reaction was completed, the polymer slurry obtained was filtered, and the polymer obtained was dried. As a result, 10.7 g of the polymer was obtained. Polymerization activity was 42.3 kg/g of the Component (A). The polymer obtained had an average particle diameter of 1050 µm with less than 1 % of fine particles having a particle diameter of 50 µm or less.

### Example 2

The procedure set forth in Example 1 was repeated except that preliminary polymerization was conducted for 1 hour. As a result, the amount of the polymer recovered from preliminary polymerization was 0.29 g, the prepolymerization PYwas 1150 g, [mm] was 0.913 and Mn was 172,000. The polymerization produced a polymer in an amount of 13.2 g. The polymerization activity was 52.0 kg/g of the Component (A), the average particle diameter was 1210 µm, and fine particles having a particle diameter of 50 µm or less was less than 1%.

### Comparative Example 1

The procedure set forth in Example 1 was repeated except that preliminary polymerization was conducted for 5 minutes. As a result, the amount of the polymer recovered from preliminary polymerization was 0.01 g, the pre-polymerization PY was 40 g, [mm] was 0.909 and Mn was 170,000. The polymerization produced a polymer in an amount of 7.1 g. The polymerization activity was 28.1 kg/g of the Component (A), the average particle diameter was 15.1 µm.

### Example 3

### Preparation of the Component (A)

Synthesis of dimethylsilylenebis(2-methylindenyl)zirconium dichloride:
In a 500 ml glass reaction vessel, 4.3 g (33 mmol) of 2-methylindene was dissolved in 80 ml of tetrahydrofuran, and 21 ml of a 1.6 M n-butyl lithium solution in hexane was slowly added dropwise to the reaction vessel under cooling. After stirring for 1 hour at room temperature, the mixture was cooled again. After 2.1 g of dimethyldichlorosilane was slowly added dropwise, the mixture was stirred at room temperature for 12 hours, and 50 ml of water was then added. The organic phase was separated and dried to give 3.5 g of dimethylbis(2-methylindenyl)silane.

3.5 g of dimethylbis(2-methylindenyl)silane obtained by the above-described procedure was dissolved in 70 ml of tetrahydrofuran, and 13.9 ml of a 1.6 M n-butyl lithium solution in hexane was slowly added dropwise. After stirring for 3 hours at room temperature, the mixture was slowly added dropwise to a solution of 2.6 g (11 mmol) of zirconium tetrachloride in 60 ml of tetrahydrofuran. After stirring the resulting mixture for 5 hours, hydrogen chloride gas was blown into the mixture and the mixture was dried. Methylene chloride was then added, and the methylene chloride soluble fraction was separated and cooled to undergo crystallization to give 0.45 g of orange powder.

It was confirmed by ¹HNMR that the compound thus obtained was dimethylsilylenebis(2-methylindenyl)zirconium dichloride, and the two 2-methylindenyl groups were asymmetric.

### Polymerization

The procedure set forth in Example 1 was repeated except that ethylenebisindenylhafnium dichloride was replaced by dimethylsilylenebis(2-methylindenyl)zirconium dichloride and preliminary polymerization was conducted for 15 minutes. As a result, the amount of a polymer recovered from the preliminary polymerization was 0.43 g with a pre-polymerization PYof 1810 g, [mm] = 0.938 and Mn = 158,000. The polymerization produced a polymer in an amount of 27.6 g. The polymerization activity was 116 kg/g of the Component (A), the average particle diameter was 250 f..lm, and fine particles having a particle diameter of less than 50 µm was less than 1 %. The bulk density of the polymer was 0.30 g/cc.

### Example 4

The procedure set forth in Example 3 was repeated except that heptane was replaced by toluene in the preliminary polymerization and the polymerization subsequenly conducted at 40°C was conducted at a temperature of 50°C. The amount of the polymer recovered from the preliminary polymerization was 0.59 g with a pre-polymerization PY of 2500 g, [mm] was 0.934 and Mn was 152,000. The polymerization produced a polymer in an amount of 62.5 g. The polymerization activity was 266 kg/g of the Component (A), the average particle diameter was 290 µm, and fine particles having a particle diameter of less than 50 µm was less than 1%. The bulk density of the polymer was 0.41 g/cc.

### Comparative Example 2

The procedure set forth in Example 4 was repeated except that dimethylsilylenebis(2-methylindenyl)zirconium dichloride was replaced by dimethylsilylenebis(indenyl)zirconium dichloride. As a result, the amount of the polymer recovered from the preliminary polymerization was 0.67 g with a pre-polymerization PYof 2,990 g, [mm] = 93.4 and Mn = 42,000. The polymerization produced a polymer in an amount of 36.6 g. The polymerization activity was 163 kg/g of the Component (A), the average particle diameter was 25.3 µm, and the bulk density of the polymer was 0.35 g/cc.

### Comparative Example 3

The procedure set forth in Example 4 was repeated except that preliminary polymerization was conducted at a temperature of 70°C. As a result, the amount of the polymer recovered from the preliminary polymerization was 1.08 g with a pre-polymerization PY of 4,540 g, [mm] = 0.921 and Mn = 78,000. The polymerization produced a polymer in an amount of 57.9 g, and the polymerization activity was 243 kg/g of the Component (A). The polymer was a mixture of particles having an average particle diameter of 800 to 1,000 µm and particles having an average particle diameter of 10 to 20 µm.

### Comparative Example 4

The procedure set forth in Example 3 was repeated except that dimethylsilylenebis(2-methylindenyl)zirconium dichloride was replaced by 10 µm of bis(cyclopentadienyl)zirconium dichloride. As a result, the amount of the polymer recovered from the preliminary polymerization was 0.60 g with a pre-polymerization PY of 410 g, [mm] = 0.30 and Mn = 1,980. The polymerization produced a liquid polymer in an amount of 32.8 g. The polymerization activity was 22.5 kg/g of the Component (A).

### Example 5

Into an autoclave having an internal volume of 1.5 liters and equipped with a stirrer purged with nitrogen, was introduced 500 ml of toluene and it was cooled to -10°C. Next, methylalumoxane in an amount of 20 mmol in terms of the AI atom and 2 µmol of dimethylsilylenebis(tetrahydroindenyl)zirconium dichloride were introduced, and 100 ml of propylene was introduced to conduct preliminary polymerization for 2 hours. After propylene was purged, 250 ml of a polymer slurry was taken out from the autoclave, filtered and the polymer was dried to give 0.11 g of a polymer. The amount of preliminary polymerization per 1 g of the Component (A) was 240 g, [mm] was 0.971 and Mn was 117,000.

After 250 ml of toluene was supplemented, the temperature of the mixture was raised, and polymerization was conducted at a propylene pressure of 7 kg/cm^{2.}G at 40°C for 2 hours. After the reaction was completed, the polymer slurry obtained was filtered, and the polymer obtained was dried. As a result, the polymer was obtained in an amount of 118.5 g. Polymerization activity was 260 kg/g of the Component (A). The polymer obtained had an average particle diameter of 110 µm and a bulk density of 0.43 g/ml.

### Example 6

Into a glass flask having an internal volume of 300 ml purged with propylene, was introduced 100 ml of toluene. Next, methylalumoxane in an amount of 5 mmol in terms of the AI atom and 5 µmol of dimethylsily- lenebis(2-methylindenyl)zirconium dichloride were introduced. Preliminary polymerization was carried out at a temperature in the flask maintained at 20°C under an atmospheric pressure of propylene for 15 minutes.

Subsequently, into a 1.5 liter autoclave equipped with a stirrer which had preliminarily purged with propylene and containing 500 ml of toluene and methylalumoxane in an amount of 10 mmol in terms of the AI atom was introduced 11 ml of the slurry obtained from the preliminary polymerization in the glass flask containing 1.0 µmol of dimethylsilylenebis(2-methylindenyl)zirconium dichloride, and propylene was polymerized thereover at 40°C under 7 kg/cm² for 2 hours. After the polymerization was completed, the polymer slurry thus obtained was filtered and the polymer obtained was dried. As a result, 109.8 g of a polymer was obtained. Polymerization activity was 231 kg/g of the Component (A). The polymer obtained had an average particle diameter of 300 µm and the bulk density was 0.31 g/ml. The pre-polymerization PY in the flask was 350 g/g of the Component (A), [mm] was 94.9 and Mn was 213,000.

### Example 7

### Preparation of a catalyst for preliminary polymerization

Into a glass flask of an internal volume of 300 ml purged with propylene, were added 100 ml of toluene and 19.1 mg (40 wmol) of dimethylsilyienebis(2-methylindenyl)zirconium dichloride. The flask was cooled to 10°C, and 2.32 g (40 mmol) of methylalumoxane diluted in 20 ml of toluene was introduced thereto. Propylene gas was introduced into the flask under atmospheric pressure at a temperature maintained lower than 20°C for 30 minutes thereby to conduct preliminary polymerization. The flask was then purged with nitrogen gas and the toluene was vaporized by means of nitrogen gas blown thereinto to give 10.5 g of a catalyst which had undergone preliminary polymerization of average particle size of 40 µm of spherical shape. The prepolymerization PY was 430 g/g-Component (A), and [mm] was 0.945 and Mn was 224,000.

### Gas-phase polymerization of propylene

Into an autoclave of an internal volume of 1.5 liters and equipped with a stirrer, were introduced under nitrogen gas atmosphere 0.11 g of methylalumoxane diluted in 1 ml of toluene and 2 g of the catalyst which had undergone preliminary polymerization obtained in the above, and gas-phase polymerization of propylene was conducted at a temperature of 50°C under a propylene pressure of 7 kg/cm²G for 2 hours. The solid product obtained was washed with a lot of water, filtered and dried to give 15.3 g of a polymer.

The catalyst activity was thus 4.2 kg polymer/g-Component (A), and the polymer obtained had an average particle size of 250 wm with a content of particles of a particle size no larger than 105 µm of 1.9% by weight, and a bulk density of 0.36 g/cc.

## Claims

1. A process for producing an a-olefin polymer which comprises contacting an a-olefin with a catalyst, which catalyst comprises the following components (A) and (B) and has been used for the preliminary polymerization of an α-olefin under the following preliminary polymerization conditions (i) and (ii), thereby polymerizing the α-olefin,
said preliminary polymerization condition (i) being that the polymer produced by the preliminary polymerization has a number average molecular weight based on the measurement of Gel Permeation Chromatography of at least 100,000.
said preliminary polymerization condition (ii) being that the amount of the polymer produced by the preliminary polymerization exceeds 50 g of the polymer/g of the component (A),
said component (A) being a transition metal compound represented by the formula (I): 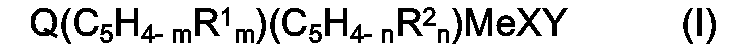
wherein Q represents a bridge which crosslinks the group (C₅H₄₋ₘR¹ₘ) and the group (C₅H₄₋ₙR²ₙ) and is a divalent hydrocarbyl group, a non-substituted or hydrocarbyl group-substituted silylene group, or a divalent hydrocarbyl group containing a germanium, phosphorus, nitrogen, boron or aluminum atom;
each of the group (C₅H₄₋ₘR¹ₘ) and the group (C₅H₄- nR2n) represents a cyclopentadienyl group or a derivative thereof wherein each of R¹ and R² represents a hydrogen atom, a hydrocarbyl group, a halogen atom, or a hydrocarbyl group containing an oxygen, silicon, phosphorus, nitrogen or boron atom, respectively, and wherein R¹ and R², which may be the same or different and, when either of R¹ and R² is present in plurality, two of R¹ or R² may or may not be bonded at their respective terminus to form a fused ring with the cyclopentadienyl group;
Me represents a transition metal of the IVB-VIB group in the Periodic Table;
each of X and Y, which may be the same or different, represents a hydrogen atom, a halogen atom, a hydrocarbyl group, an alkoxy group, an amino group, a nitrogen-containing hydrocarbyl group, a phosphorus-containing hydrocarbyl group or a silicon-containing hydrocarbyl group, respectively; and
m is defined as 0 ≦ m ≦ 4, and n is defined as 0 ≦ b ≦ 4,
said component (B) being an alumoxane represented by the following general formula (II) or (III): 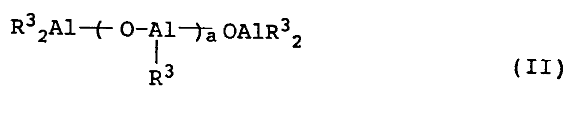 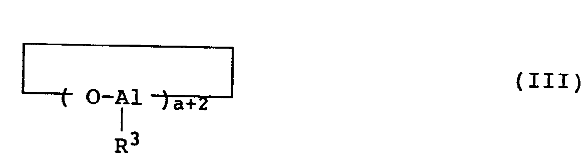
wherein a denotes a number in the range of 4 to 30, and R³ represents a monovalent hydrocarbyl group.

2. The process as claimed in claim 1, wherein the Me is selected from the group consisting of Zr and Hf.

3. The process as claimed in claim 2, wherein the Me is Zr.

4. The process as claimed in claim 1, wherein the moieties (C₅H₄ mR1m) and (C₅H_{4 n}R²ₙ) are each selected from the group consisting of a cyclopentadienyl group, an indenyl group and a fluorenyl group.

5. The process as claimed in claim 1, wherein the moieties (C₅H₄₋ₘR¹ₘ) and (C₅H₄₋ₙR²ₙ) are each selected from the group consisting of a substituted cyclopentadienyl group, a substituted indenyl group and a substituted fluorenyl group, all within the scope of the formulae.

6. The process as claimed in claim 1, wherein the Q in the formula (I) is an alkylene group having a shortest chain length between the cyclopentadienyl moieties of 1 or 2 carbon atoms.

7. The process as claimed in claim 6, wherein the alkylene group is selected from the group consisting of a methylene group, an ethylene group, an isopropylene group, a phenylmethylmethylene group, a diphenylmethylene group, and a cyclohexylene group.

8. The process as claimed in claim 1, wherein the Q in the formula (I) is a silylene group having a shortest chain length between the cyclopentadienyl moieties of 1 to 2 silicon atoms.

9. The process as claimed in claim 8, wherein the silylene group is selected from the group consisting of a silylene group, a dimethylsilylene group, a phenylmethylsilylene group, a diphenylsilylene group, disilylene group, and a tetramethyldisilylene group.

10. The process as claimed in claim 1, wherein the Q in the formula (I) is a hydrocarbyl group containing a non-carbon atom selected from the group consisting of G, P, N and AI having a shortest chain length between the cyclopentadienyl moieties of 1 atom of the non-carbon atom.

11. The process as claimed in claim 10, wherein the Q is selected from the group consisting of (CH₃)₂Ge=,

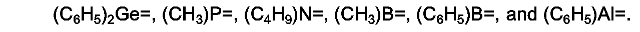

12. The process as claimed in claim 1, wherein the X and Y are each a halogen atom.

13. The process as claimed in claim 1, wherein the moiety R³ in the alumoxane is an alkyl group of 1 to 4 carbon atoms.

14. The process as claimed in claim 13, wherein the moiety R³ is selected from the group consisting of a methyl group, an isobutyl group and a mixture of a methyl group and an isobutyl group.

15. The process as claimed in claim 1, wherein the preliminary polymerization is conducted at a temperature no higher than the level at which the polymerization which succeeds the preliminary polymerization is conducted.

16. The process as claimed in claim 1, wherein the α-olefin for the preliminary polymerization is propylene.

17. The process as claimed in claim 1, wherein the polymer produced in the preliminary polymerization has the value of [mm] or [rr] upon ¹³C-NMR analysis of at least 0. 80.

18. The process as claimed in claim 1, wherein the preliminary polymerization is conducted at a temperature lower than 40°C.
